# EUROPEAN PATENT APPLICATION

(11) **EP 2 383 513 A1**
(43) Date of publication of application: **02.11.2011**
(21) Application number: 10735657.8
(22) Date of filing: 28.01.2010
(51) Int. Cl.: F23K 5/00, F23N 5/18, F23N 5/24, G01F 3/22

(54) **GAS SHUTOFF DEVICE**

(30) Priority: 29.01.2009 JP 2009017560; 29.01.2009 JP 2009017561
(71) Applicant: Panasonic Corporation, Kadoma-shi Osaka 571-8501 (JP)
(72) Inventor: UEKI, Kouichi, Chuo-ku, Osaka-shi Osaka 540-6207 (JP); OOTANI, Takuhisa, Chuo-ku, Osaka-shi Osaka 540-6207 (JP); IWAMOTO, Ryuji, Chuo-ku, Osaka-shi Osaka 540-6207 (JP); ASANO, Kazutaka, Chuo-ku, Osaka-shi Osaka 540-6207 (JP)
(74) Representative: Schwabe - Sandmair - Marx
(86) International application number: PCT/JP2010/000515
(87) International publication number: WO 2010/087185

(57) **Abstract**

An object of the present invention is to make a function of limiting the use time appropriate by appropriately registering flow rates of appliances.

A gas shutoff device includes a flow rate detecting unit 10 for measuring a flow rate, a flow rate calculating unit 11 for calculating an instantaneous flow rate value from a detected value, an average flow rate calculating unit 12 for obtaining an average flow rate from the obtained instantaneous flow rate, a flow rate change determining unit 13 for determining presence of a flow rate change from the obtained average flow rate, a flow rate registering unit 14 for downwardly correcting a registered flow rate close to the amount of flow rate change for an increase change or the amount of flow rate change for a decrease change, a flow rate difference determining unit 16 for performing downward correction by calculating a flow rate difference from the sum of registered flow rates and the average flow rate and registering the amount of flow rate difference to the flow rate registering unit 14, an abnormality determining unit 17 for determining presence of abnormality from the registered flow rates and the monitoring determining value, and a shutoff unit 19 for stopping gas supply when abnormality is determined in the abnormality determining unit 17.

## Description

### Technical Field

The present invention relates to a gas shutoff device, particularly a gas shutoff device that prevents erroneous shutoff by a use time restriction function even if a use flow rate is changed by flow rate control of an appliance itself.

### Background Art

In the related art, as this type of a gas shutoff device, a gas shutoff device has been disclosed, which includes a flow rate measuring unit for outputting a flow rate signal for a passing gas amount, an individual appliancestimating unit for estimating an increase or decrease in the individual appliances that are in use when the flow rate signal increases or decreases and outputting an estimated individual calculation flow rate and the used time of the increased or decreased appliances, an individual flow rate registering unit for registering the flow rate of an individual appliance in advance that is used and outputting the flow rate (registered individual flow rate) of the registered individual appliance and the use time, an individual flow rate storing unit for storing the registered individual flow rate, an abnormal flow rate determining unit that outputs an individual abnormal signal when the estimated individual calculation flow rate of the increase or decreased appliance is not included in the registered individual flow rate of the individual flow rate storing unit and the continuous use time of the increased or decreased appliances continues for a first predetermined time or longer, an informing unit for receiving the individual abnormal signal and warning of an abnormality in the gas flow rate or a shutoff unit for shutting off the gas channel, and a full-time individual flow rate registering unit for registering the estimated individual calculation flow rate of the individual flow rate estimating unit when the estimated individual calculation flow rate of the appliance of the individual appliancestimating unit is not included in the registered individual flow rate of the individual flow rate storing unit and the used time of the appliance of the individual appliancestimating unit is longer than a second predetermined time and shorter than the first predetermined time (for example, see Patent Document 1).

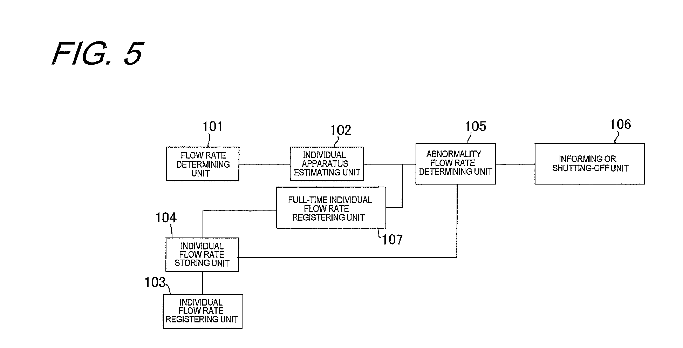

The configuration of the gas shutoff device of the related art is briefly described with reference to Fig. 5. "101" indicates the flow rate measuring unit, which is a flow rate sensor attached to a gas meter. "102" indicates the individual appliancestimating unit, which calculates a flow rate signal of the flow rate sensor for a predetermined measuring period of time (30 seconds) as the average flow rate, estimates an increase or decrease in an individual flow rate that is in use on the basis of an increase or decrease in the average flow rate, and outputs the estimated individual calculation flow rate Q of the increased or decreased appliances and the used time. When the average flow rate increases, the individual appliancestimating unit 102 determines that the gas appliance corresponding to the increased amount was used, and when the average flow rate decreases, the individual appliancestimating unit 102 determines that the gas appliance corresponding to the decreased amount was stopped, thereby estimating the individual appliance that is in use. When the appliance flow rate that agrees with a flow rate change by downward correction by a variety of control, for example, the difference between the registered flow rate and the amount of flow rate change is within a predetermined flow rate range, it is determined as the corresponding flow rate and downwardly corrected.

"103" indicates the individual flow rate registering unit, which is a setting device that inputs in advance a flow rate Qi of an individual appliance that is used at home. "104" indicates the individual flow rate storing unit, which sequentially stores the flow rate Qi of the individual appliance of the individual flow rate registering unit 103 and the flow rate of the full-time flow rate registering unit 107 Q1, Q2, Q3, ... Qn. "105" indicates the abnormal flow rate determining unit, which outputs an individual abnormal signal E when the estimated individual flow rate Q output from the individual appliancestimating unit 102 is not included in [Q1, Q2, Q3, ... Qn] of the individual flow rate storing unit 104 and the estimated individual flow rate Q continues for a first predetermined time (10 minutes) or longer. "106" indicates the shutoff unit that is the informing unit, which is equipped with an LCD or an LED that provides a warning by receiving the individual abnormal signal E or a shutoff valve that shuts off the gas channel. "107" indicates the full-time individual flow rate registering unit, which outputs the estimated individual flow rate Q to the individual flow rate storing unit 104 when the estimated individual flow rate Q output from the individual appliancestimating unit 102 is equal to or more than a predetermined time (3 minutes) and within the first predetermined time (10 minutes).

Next, the operation of the configuration of the example in the related art is described. The average flow rate is calculated on the basis of the flow rate signal of the flow rate measuring unit 101. The estimated individual calculation flow rate Q is obtained by obtaining the changed flow rate between the average flow rate and the average flow rate measured at the time before last, determining whether the variation is an increased or decreased, and performing each process. It is determined whether the estimated individual calculation flow rate Q obtained as the result of the process for the increase or decrease is included in the individual flow rate storing unit 104 and used for the first predetermined time (10 minutes). When the estimated individual flow rate is not included and is not used for 10 minutes or longer, the informing unit of the shutoff unit 106 is operated. When the estimated individual flow rate is not included or is not used for 10 minutes or shorter, it is determined whether the non-registered flow rate is used for 3 minutes or longer and the use time is 10 minutes or shorter, and when both are satisfied, the full-time individual flow rate registering unit 107 performs a process of registration on the individual flow rate storing unit 104.

When the average flow rate is increased by Qt (for example, Q2+Q3) by simultaneously using a plurality of appliances and the use time is, for example, 7 minutes, that is, the average flow rate decreases after 7 minutes, an estimated individual flow rate Qt is output by the individual appliancestimating unit 102. The estimated individual flow rate Qt is registered in the individual flow rate registering unit 104 as the used time of 3 minutes or longer and 10 minutes or shorter by the full-time individual flow rate unit 107. Thereafter, since it is registered in the individual flow rate storing unit 104, shutoff is not required even if the flow rate is 10 minutes or longer. That is, it is possible to reduce erroneous shutoff by gas appliances that simultaneously start in many cases. Further, when there is a new individual flow rate Qk (3 minutes or longer and 10 minutes or shorter) from a replaced appliance, an estimated individual flow rate Qk is output by the individual appliancestimating unit 102. Since the estimated individual flow rate Qk is 3 minutes or longer and 10 minutes or shorter, the estimated individual flow rate is registered in the individual flow rate storing unit 104 by the full-time individual flow rate registering unit 107.

Thereafter, since it is registered in the individual flow rate storing unit 104, shutoff is not required even if the flow rate is 10 minutes or longer. It is possible to prevent an accident of gas leakage due to flow rate other than those of the individual appliances by storing in advance individual appliances that are used at home, such that it is possible to prevent erroneous shutoff due to the simultaneous start or replacement of the appliances.

### Citation List

Patent Literature
   [PTL 1] JP-A-7-44239

### Summary of Invention

### Technical Problem

However, according to the configuration of the related art, there is a function that prevent erroneous shutoff by shutting off the gas channel when a flow rate other than those registered in individual flow rate storing unit is newly detected or registering it as a registration individual flow rate, when an individual appliancestimating unit estimates individual appliance, if an appliance registered as a registration individual flow rate stops being used, with the flow rate gradually changing within a normal range by flow rate control of the appliance itself, it becomes a value different from the individual flow rate when being registered, such that the registration individual flow rate may be removed by error when the registration individual flow rate is removed. In this case, the one with a small amount of registration individual flow rate is removed and the one with a large amount of registration individual flow rate remains, the time limit where the appliance can be continuously used is reduced, such that a gas shutoff valve operates earlier than expected and stop supply of the gas. On the contrary, when the one with a large amount of registration individual flow rate is removed and the one with a small amount of registration individual flow rate remains, the time limit of continuous use is extended, such that when an appliance with a large amount of use flow rate is used, the appliance may have a problem in terms of safety.

For example, a water heater may change the amount of combustion by controlling a gas flow rate in respect to a temperature difference in order to keep the set temperature in shower or the like, and a gas fan heater may change the amount of combustion by controlling the gas flow rate in order to keep a predetermined room temperature. In this case, the gas flow rate is slowly reduced by control of combustion amount according to a load change, for the estimated individual calculation flow rate obtained by the individual appliancestimating unit when the appliance start to be used and registered in the individual flow rate registering unit, and a difference from the initial estimated individual calculation flow rate may be generated with time passed. In general, when an appliance stops being used or a large change of flow rate is generated while a plurality of appliances are used, the estimated individual calculation flow rate of the individual flow rate registering unit is re-registered on the basis of the amount of change, but as the used state, when the flow rate slowly changes with a small amount of change, the use is continued without performing the re-registering process of the estimated individual calculation flow rate. Therefore, in order to perform re-registering of the estimated individual calculation flow rate at the timing of stopping the use of the appliance or adding use of another appliance, the actual flow rate decreased by the control of the amount of combustion may be different from the sum of the registered flow rates. In this case, the sum of the registered flow rates is monitored as if it is slightly much than the actual flow rate, such that the time limit of the continuous appliance use time is shifted and erroneous shutoff is generated. That is, there is a problem that it is impossible to prevent erroneous shutoff due to monitoring different from the actually used flow rate.

In order to solve the problem, the present invention provides a gas shutoff device that has high safety without erroneous shutoff by approximating a registered individual flow rate to the actually used flow rate even in a use type in which a gas flow rate slowly changes with a small change ratio, by correcting the registered individual flow rate on the basis of data for a difference when there is a difference equal to or more than a predetermine value by comparing the registered individual flow rate after a predetermined registered individual flow rate is removed with an average flow rate value obtained by the flow rate calculating unit, when it is detected that an appliance stops being used.

### Solution to Problem

In order to solve the problems in the related art, the present invention provides a gas shutoff device that monitors the use state of a plurality of gas appliances and stops supply of gas when abnormality is generated, in which the gas shutoff device includes a flow rate detecting unit for measuring flow rate, a flow rate calculating unit for calculating instantaneous flow rate value from a detected value of the flow rate detecting unit, an average flow rate calculating unit for obtaining an average flow rate from the instantaneous flow rate obtained by the flow rate calculating unit, a flow rate change determining unit for determining presence of an appliance change flow rate from the obtained average flow rate, a flow rate registering unit for registering a flow rate change when an increased change is determined by the flow rate change determining unit and decreasing to correct the registered flow rate that is close to the flow rate change when a decreased change is determined, a flow rate difference determining unit for registering a flow rate difference by an increase flow rate registering unit when the difference is positive by calculating the flow rate difference from the sum of the registered flow rate and the average flow rate and decreasing to correct the registered flow rate by a decrease flow rate registering unit when the difference is negative, a monitoring value storing unit for storing a determined value for monitoring the use state of the appliance, an abnormality determining unit for determining presence of abnormality from the registered flow rates of the flow rate registering unit and the determined value of the monitoring value storing unit, and a shutoff unit for stopping supply of gas when the abnormality is determined by the abnormality determining unit.

According to the present invention, when the appliance is used and the appliance flow rate is registered, fine flow rate change that is not determined as a flow rate change by the flow rate change determining unit is continues, when any appliance stops being used, it is determined as a first flow rate change and removed by the flow rate registering unit; however, there is a flow rate difference between the average flow rate after the flow rate is registered and the sum of registered flow rates, the difference between the average flow rate and the sum of registered flow rates is obtained again. For the amount of positive flow rate difference, the amount of flow rate difference is re-registered, while for the amount of negative flow rate difference, downward correction is performed from the closest registered flow rate in the flow rates registered at the obtained flow rate difference, such that the sum of flow rates of the used appliances and the sum of registered flow rate value that is monitored become the same and monitoring is possible at the corresponding use time, and accordingly, when the appliance of which flow rate is slightly changed stops being used or the flow rate is decreased, it is possible to prevent the number of unnecessary going out times of gas provider from increasing and prevent usability from decreasing due to stop for a short time of heating appliances that may be originally used for a long time, due to the flow rate value that is slightly changed by error and re-registered by error and the use time that is stopped at the earlier stage by performing use time monitoring on the flow rate while safety is high.

### Advantageous Effects of Invention

According to the gas shutoff device of the present invention, when a plurality of appliances are used and a plurality of appliance flow rates is registered, even if the flow rate is slightly increased such that it is not determined as being changed by the flow rate change determining unit or the actual average flow rate is slightly changed by decrease of the flow rate value, by re-registering the flow rate difference between the obtained average flow rate and the total flow rate of the flow rate registering unit which is monitored, or by downwardly correcting again from the registered flow rate, the normal total flow rate used by the appliances and the total flow rate of the flow rate registering unit which monitors the flow rate are monitored at the same level. Therefore, it is possible to prevent, without missing the monitored appliance flow rates, the number of unnecessary going out times of gas provider from increasing and prevent usability from decreasing due to stop for a short time of heating appliances that may be originally used for a long time, due to the flow rate value that is slightly changed by error and re-registered by error and the use time that is stopped at the earlier stage by performing use time monitoring on the flow rate, such that reliability and safety are high.

### Brief Description of Drawings

Fig. 1 is a configuration view showing an installation type of a gas shutoff device and a gas appliance according to a first embodiment of the present invention.
Fig. 2 is a control block diagram of the gas shutoff device according to the first embodiment of the present invention.
Fig. 3 is a control block diagram of a gas shutoff device according to a second embodiment of the present invention.
Fig. 4 is a control block diagram of a gas shutoff device according to a third embodiment of the present invention.
Fig. 5 is a control block diagram of a gas shutoff device of the related art.

### Description of Embodiments

The first present invention provides a gas shutoff device that monitors the use state of a plurality of gas appliances and stops supply of gas when an abnormality is generated, and the gas shutoff device includes a flow rate detecting unit for measuring the flow rate, a flow rate calculating unit for calculating an instantaneous flow rate value from a detected value of the flow rate detecting unit, an average flow rate calculating unit for obtaining an average flow rate from the instantaneous flow rate obtained by the flow rate calculating unit, a flow rate change determining unit for determining presence of a change in the appliance change flow rate from the obtained average flow rate, a flow rate registering unit for registering a flow rate change when an increased change is determined by the flow rate change determining unit and downwardly correcting a registered flow rate that is close to the flow rate change when a decreased change is determined, a flow rate difference determining unit for registering a flow rate difference by an increase flow rate registering unit when the difference is positive by calculating the flow rate difference from the sum of the registered flow rate and the average flow rate and downwardly correcting the registered flow rate by a decrease flow rate registering unit when the difference is negative, a monitoring value storing unit for storing a determined value for monitoring the use state of the appliance, an abnormality determining unit for determining presence of an abnormality from the registered flow rates of the flow rate registering unit and the determined value of the monitoring value storing unit, and a shutoff unit for stopping supply of gas when it is determined that there is an abnormality by the abnormality determining unit.

Further, the use of an appliance is detected by the flow rate detecting unit, the average flow rate is obtained by converting the flow rate into an instantaneous flow rate by the flow rate calculating unit, whenever the appliance is used, the flow rate is registered by the increase flow rate registering unit, when the appliance is used and the appliance flow rate is registered, fine flow rate change that is not determined as a flow rate change by the flow rate change determining unit is continued, when any appliance stops being used, it is determined as a first flow rate change and removed by the flow rate registering unit; however, when a flow rate difference between the obtained flow rate and the sum of the flow rate registered value is positive, the flow rate difference is re-registered, and when it is negative, the flow rate of all of the used appliances is registered by downwardly correcting the flow rate difference from the closest registered flow rate, and monitoring at the corresponding use time can be performed, when the appliance of which the flow rate is slightly changed stops being used or the flow rate is decreased, it is possible to prevent the number of unnecessary going-out times of the gas provider from increasing and prevent usability from decreasing due to stop for a short time of heating appliances that can be originally used for a long time, due to the flow rate value that is slightly changed by error and re-registered by error and the use time that is stopped at the earlier stage by performing use time monitoring on the flow rate; therefore, it is possible to provide a gas shutoff device having a high level of safety.

The second invention provides a gas shutoff device that monitors the use state of a plurality of gas appliances and stops supply of gas when abnormality is generated, and the gas shutoff device includes a flow rate detecting unit for measuring flow rate, a flow rate calculating unit for calculating instantaneous flow rate value from a detected value of the flow rate detecting unit, an average flow rate calculating unit for obtaining an average flow rate from the instantaneous flow rate obtained by the flow rate calculating unit, a flow rate change determining unit for determining presence of an appliance change flow rate from the obtained average flow rate, a flow rate registering unit for registering a flow rate change when an increased change is determined by the flow rate change determining unit and downwardly correcting a registered flow rate that is close to the flow rate change when a decreased change is determined, a flow rate difference determining unit for registering a flow rate difference by an increase flow rate registering unit when the difference is positive by calculating the flow rate difference from the sum of the registered flow rate and the average flow rate and downwardly correcting the registered flow rate by a decrease flow rate registering unit when the difference is negative, a flow rate difference comparing unit for outputting flow rate for correction when the flow rate difference is equal to or more than a predetermined value, a monitoring value storing unit for storing a determined value for monitoring the use state of the appliance, an abnormality determining unit for determining presence of abnormality from the registered flow rates of the flow rate registering unit and the determined value of the monitoring value storing unit, and a shutoff unit for stopping supply of gas when the abnormality is determined by the abnormality determining unit.

Further, use of an appliance is detected by the flow rate detecting unit, the average flow rate is obtained by converting the flow rate into an instantaneous flow rate by the flow rate calculating unit, whenever the appliance is used, the flow rate is registered by the increase flow rate registering unit, when the appliance is used and the appliance flow rate is registered, fine flow rate change that is not determined as a flow rate change by the flow rate change determining unit is continued, when any appliance stops being used, it is determined as a first flow rate change and removed by the flow rate registering unit; however, it is determined presence of a flow rate difference between the obtained average flow rate and the sum of the flow rate registered value, when there is a flow rate difference that is equal to or more than a predetermined flow rate value corresponding to the appliance flow rate, flow rate registration correction is performed by the flow rate registering unit, but when the flow rate difference is positive equal to or more than the predetermined value, the flow rate difference is re-registered, and when the flow rate difference is negative equal to or more than the predetermined value, the flow rate of all of the used appliances is registered by downwardly correcting the flow rate difference from the closest registered flow rate, and monitoring at the corresponding use time can be performed, when the appliance of which flow rate is slightly changed stops being used or the flow rate is decreased, it is possible to prevent the number of unnecessary going out times of gas provider from increasing and prevent usability from decreasing due to stop for a short time of heating appliances that can be originally used for a long time, due to the flow rate value that is slightly changed by error and re-registered by error and the use time that is stopped at the earlier stage by performing use time monitoring on the flow rate; therefore, it is possible to provide a gas shutoff device having high safety.

The third invention provides a gas shutoff device that monitors the use state of a plurality of gas appliances and stops supply of gas when abnormality is generated, and the gas shutoff device includes a flow rate detecting unit for measuring flow rate, a flow rate calculating unit for calculating instantaneous flow rate value from a detected value of the flow rate detecting unit, an average flow rate calculating unit for obtaining an average flow rate from the instantaneous flow rate obtained by the flow rate calculating unit, a flow rate change determining unit for determining presence of an appliance change flow rate from the obtained average flow rate, a flow rate registering unit for registering a flow rate change when an increased change is determined by the flow rate change determining unit and downwardly correcting a registered flow rate that is close to the flow rate change when a decreased change is determined, a flow rate difference calculating unit for obtaining a flow rate difference from the sum of the registered flow rate and the average flow rate, a flow rate correction determining unit for adding the flow rate difference first to the flow rate registration value when a decreased change is detected by the flow rate change determining unit and the flow rate difference obtained from the sum of the registered flow rate and the average flow rate is positive, and then correcting the registered flow rate with the decreased flow rate, a monitoring value storing unit for storing a determined value for monitoring the use state of the appliance, an abnormality determining unit for determining presence of abnormality from the registered flow rates of the flow rate registering unit and the determined value of the monitoring value storing unit, and a shutoff unit for stopping supply of gas when the abnormality is determined by the abnormality determining unit.

Further, it is detected that an appliance starts to be used, by the flow rate detecting unit, the average flow rate is obtained by converting the flow rate into an instantaneous flow rate by the flow rate calculating unit and registered by the flow rate registering unit, when a plurality of appliances are used and the appliance flow rates are registered, a fine flow rate increase change that is not determined as a flow rate by the flow rate change determining unit by flow rate control of the appliances is continued for a long time, and then any appliance that is used reduces or stops the flow rate and a flow rate change is determined first; however, when there is a flow rate difference between the sum of registered flow rate and the average flow rate by fine flow rate increase, it is determined that fine flow rate change is generated before the flow rate change, the flow rate difference between the sum of registered flow rate and the average flow rate is obtained is added from the closest registered flow rate in the registered flow rates, the total flow rate of the used appliances and the sum of flow rate registration values are matched, and then, by downwardly correcting the decreased flow rate detected in the flow rate detecting unit by the flow rate correcting unit from a flow rate registering unit, the flow rates of all of the used appliances are registered, and monitoring at the corresponding use time can be performed, when use of the appliance of which flow rate is slightly changed is stopped or the flow rate is decreased, it is possible to prevent the number of unnecessary going out times of gas provider from increasing and prevent usability from decreasing due to stop for a short time of heating appliances that can be originally used for a long time, due to the flow rate value that is slightly changed by error and re-registered by error and the use time that is stopped at the earlier stage by performing use time monitoring on the flow rate; therefore, it is possible to provide a gas shutoff device having high safety.

Hereinafter, embodiments of the present invention are described with reference to the drawings. Further, the present invention is not limited to the embodiments.

### (First Embodiment)

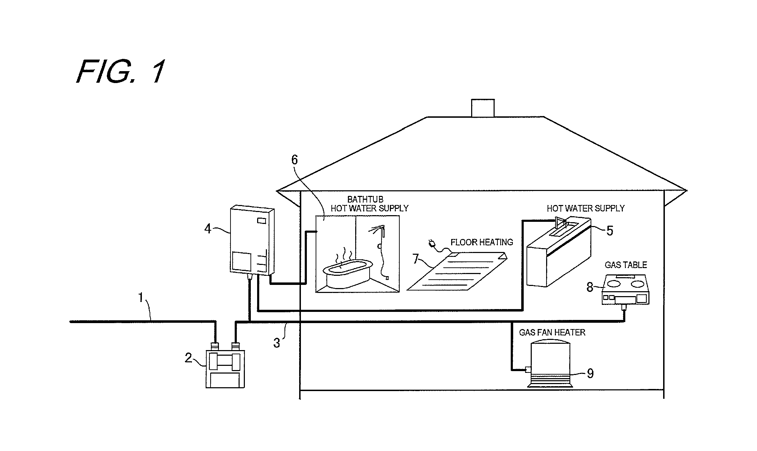

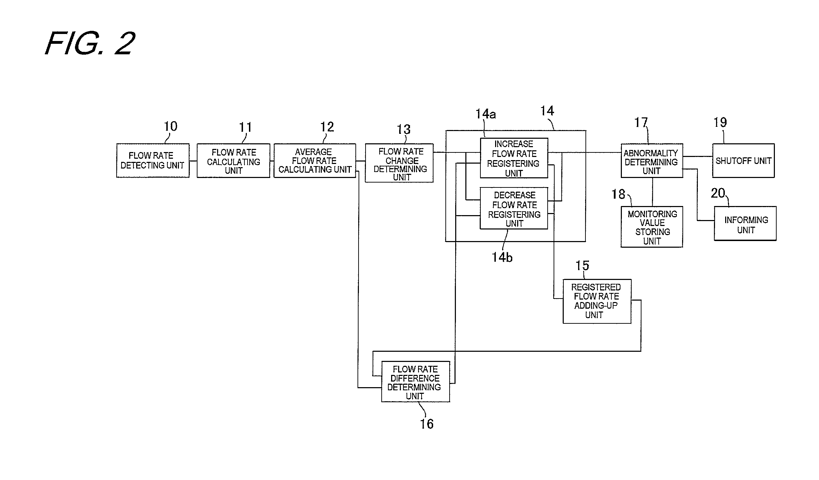

Fig. 1 is a configuration diagram showing the installation type of a gas appliance and a gas shutoff device according to a first embodiment of the present invention and Fig. 2 is a control block diagram of the gas shutoff device.

A gas shutoff device 2 is disposed at the inlet portion of a gas supply pipe 1 in each home, a pipe diverging from a gas pipe 3 through the gas shutoff device 2 extends to the place where various gas appliances are disposed, such that gas is supplied. For example, a water heater 4 is disposed outside a house and hot water generated by the water heater 4 is supplied to a hot-water tap 5 at the kitchen, a bath 6 with a shower device or a bathtub, or a floor heating device 7 disposed in the living room through a water pipe, such that various use types are implemented.

Further, in the house, gas is supplied to a gas table 8 disposed in the kitchen or a gas fan heater 9 disposed in the living room or a bedroom and appropriately used in accordance with demand.

Further, when the disposed gas appliance is used and the gas is consumed, the amount of use is measured at the gas shutoff device 2 and the amount of use is accumulated and stored as a measured value. Information process is performed on the data stored in the gas shutoff device 2 on the basis of periodic data request instruction from the gas provided and then is used as information on the gas fee or the amount of use of gas or a discount service provided by the gas provider, for the consumer or the gas provider.

Further, a gas channel with a gas inlet and a gas outlet is formed and a flow rated detecting unit 10 that measures the gas flow rate is disposed at the gas shutoff device 2. Further, there are various types for the flow rate detecting unit 10, that is, transmitting an ultrasonic signal from one side to the other side from a pair of ultrasonic sensor disposed in a channel and used gas flow rate from the propagation time, which is described in the embodiment, or disposing a heat-wire sensor in the channel and obtaining a flow rate from an impedance that is changed by flow, or detecting a flow rate as an electric pulse signal representing a mechanical operation of a measuring layer, which detects a gas amount by a measuring layer, by magnet and a read switch, magnetic resistor, or the like.

The flow rate detecting unit 10 using an ultrasonic sensor is briefly described. A first transceiver that transmits or receives an ultrasonic wave and a second transceiver that receives or transmits an ultrasonic wave are disposed against the flow direction and can be switched to transmit and receive by a control circuit. An ultrasonic wave is transmitted from the upper stream to the lower stream by processing signals of the first transceiver and the second transceiver and measuring a flow rate. The second transceiver receives the signal and measuring unit measures the propagation time.

Next, a switching unit transmits an ultrasonic signal from the lower stream to the upper stream and measures the propagation time. Further, a flow rate value is obtained by the flow rate calculating unit 11, using a flow rate coefficient corresponding to the size of the channel and the flow state of the fluid, from a propagation time difference of the ultrasonic waves of the first transceiver and the second transceiver. The flow rate is obtained for every period that is predetermined as an instantaneous flow rate value.

Further, the instantaneous flow rate values obtained for every predetermined period by measuring is input to the average flow rate calculating unit 12 and a predetermined number of instantaneous times are collected and output as an average flow rate. The flow rate change determining unit 13 determines presence of a change in the presence of the appliance flow rate from the average flow rate. A change between the average flow rate obtained at this time and the previous average flow rate is determined. Thereafter, the average flow rate of this time is stored in time-series in the flow rate change determining unit 13. That is, the flow rate change determining unit 13 determines presence of a change equal to or more than a predetermined value by comparing the average flow rate calculated at this time by the average flow rate calculating unit 12 with the previous average flow rate, and determines whether the appliance starts to be used or whether there is a flow rate change. For example, when a consumer uses a water heater 4, the flow rate value changes from 0 to a predetermined flow rate, or whether to use/stop the appliance or whether there is a flow rate change is determined from whether a flow rate change ratio or the amount of flow rate change is equal to or more than a predetermined value, from the average flow rate when the water heater 4 is used while another appliance is used and the previous flow rate.

Further, when the flow rate change determining unit 13 determines a flow rate change, it is determined whether the appliance starts to be used or an appliance stops being used, in detail, when the appliance is used, the amount of a flow rate change is set as a registered flow rate value in the flow rate registering unit 14. The flow rate registering unit 14 is composed of an increase flow rate registering unit 14a and a decrease flow rate registering unit 14b. It is determined that the appliance is additionally used every time a change is detected at the flow rate increase side and the amount of each flow rate change is set as a new flow rate registered value. On the contrary, when the appliance stops being used, the registered flow rate value close to the amount of flow rate change in the registered flow rate values registered in the flow rate registering unit 14 is removed from the flow rate registering value by determining that the appliance is stopped. Similar to the removing, it is determined that the appliance stops being used every time a change is detected at the flow rate decrease side and removing of a registered flow rate is performed. When the flow rate change is the same as the registered flow rate value, a registered flow rate having the smallest difference from the amount of flow rate change, or a change ratio between the registered flow rate and the difference between the registered flow rates and the amount of flow rate change is obtained, the smallest flow rate value is downwardly corrected to the flow rate change value and determined as the flow rate change of the closest appliance, and the registered values are changed in ascending order.

Next, a registered flow rate adding-up unit 15 obtains the total flow rate of the flow rate values registered in the flow rate registering unit 14. A flow rate difference determining unit 16 obtains a flow rate difference from the average flow rate of all of the used appliance, which is obtained by the average flow rate calculating unit 12, and the total value of the registered flow rate obtained by the registered flow rate adding-up unit 15. When there is a flow rate difference, it is re-input to the flow rate registering unit 14, and when the actual average flow rate is larger, the flow rate as much as the flow rate difference is registered, and when the actual average flow rate is smaller, the registered flow rate that is closest to the flow rate difference is downwardly corrected. It is performed until the flow rate difference is removed.

Further, an abnormality determining unit 17 monitors an appliance that is used at a set registered flow rate. A monitored value storing unit 18 stores time limit of used time corresponding to each flow rate section or monitoring-determining value of the maximum used flow rate. For example, when a hose for supplying gas to a stove is deviated due to a certain reason, abnormal mis-flow rate is generated, but the monitored value storing unit 18 stores a total flow rate shutoff value for monitoring this state or a time limit of a use time regulating the limit in use time, corresponding to when an appliance is used longer than the maximum use time that is the common use time. The abnormality determining unit 17 compares and determines the set value with the registered flow rate value of the flow rate registering unit 14, such that it is monitored whether the registered flow rate value exceeds the maximum use flow rate value or whether the use time of the appliance exceeds the time limit of continuous use corresponding to the registered flow rate. When the abnormality determining unit 17 determines that there is abnormality, a shutoff signal is transmitted to a shutoff unit 19 and the gas supply is stopped. Further, an informing communicating unit 20 displays the shutoff state or the shutoff fact on a liquid crystal display device and notifies the gas provider who monitors safety of the gas by communication through a telephone line.

Next, the operation of the gas shutoff device having the configuration described above is described. When a gas appliance, for example, the water heater 4 or a gas fan heater 9 of a customer is used, the flow rate is detected by the flow rate detecting unit 10. For example, when an ultrasonic sensor is used, the propagation time of an ultrasonic wave is measured as a detection value and the signal is transmitted to the flow rate calculating unit 11 and converted into an instantaneous flow rate value, and then calculated as an average flow rate for each predetermined number by the average flow rate calculating unit 12. The flow rate change determining unit 13 periodically determines presence of an appliance flow rate change in the obtained average flow rate. After the flow rate change determining unit 13 determines a flow rate change, a plurality of average flow rates is stored in time-series. Whether there is a flow rate change is obtained from the existing flow rate (for example, the previous stored flow rate value, the flow rate value at the time before the last or the time before N-th time) stored in the flow rate change determining unit 13 and the present average flow rate. That is, whether the appliance is used or stopped is determined from the change state by using the average flow rate value output at predetermined intervals while the amount of flow rate change for the change is newly registered in the flow rate registering unit 14 as the registered flow rate of the used appliance and the registered flow rate that has been registered is downwardly corrected or removes, thereby accurately setting the registered flow rate corresponding to the used appliance at the time of change. When the flow rate is changed by various control or stop of the appliance at the time of decrease change, the amount of flow rate change and the registered flow rate may not be the same, such that when it is within a predetermined flow rate range or a predetermined ratio, the flow rate registering unit 14 determines that it is close to the corresponding appliance or is the corresponding appliance and performs decrease correction. When it is within the predetermined range, the difference between the registered flow rate and the decreased flow rate is the difference between the actual flow rate and the registered flow rate.

For example, when the water heater 4 is used, for example, the existing flow rate is 0, the flow rate is changed to 1500L/h, but whether there is a change is obtained by comparing the change with the present average flow rate and the existing average flow rate. When the change ratio or the amount of change is equal to or more than a predetermined value, it is determined that there is a change and an appliance is used, and it is registered in the flow rate registering unit 14. Alternatively, when the water heater 4 is used while the gas table 8 is used, the flow rate of the gas table 8 is stored to the existing flow rate of the flow rate change determining unit 13, the flow rate change determining unit 13 obtains the changed flow rate from the present average flow rate and the stored existing flow rate value, and similarly, when the change ratio from the present flow rate or the changed flow rate is equal to or more than a predetermined value, it is determined there is a change and the changed flow rate is registered in the flow rate registering unit 14. In the flow rate registering unit 14, the average flow rate obtained when there is a flow rate change is input to the increase a flow rate registering unit 14a and the decrease flow rate registering unit 14b. When the flow rate increase and the determined signal are input to the flow rate change determining unit 13, the flow rate increasing from the previous average flow rate is registered. Further, when any appliance stops being used or the flow rate changes while a plurality of appliances is used, the flow rate change determining unit 13 determines presence of a decrease change from the stored existing flow rate value and average flow rate, outputs the decrease change flow rate and the flow rate registering unit 14 removes or reduces the flow rate registered value that is the closest to the decrease change flow rate in the registered flow rates. When the amount of the flow rate change is not the same as the registered flow rate value, the registered value having the smallest difference from the amount of the flow rate change, or a change ratio between the registered flow rate and the difference of the registered flow rates and the amount of the flow rate change is obtained, the smallest flow rate value is downwardly corrected to the flow rate change value and determined as the flow rate change of the closest appliance, and the registered values are changed in ascending order.

Further, all of the registered flow rate values are added up in the registering flow rate adding-up unit 15, such that the total flow rate is obtained. A flow rate difference is obtained from the obtained average flow rate and the total registered flow rate by the flow rate difference determining unit 16. When the flow rate difference is not 0, it is determined that the flow rate is not registered in the flow rate registering unit 14 that monitors the used appliance and a flow rate as much as the amount of the flow rate difference is re-registered. When the flow rate difference is positive, that is, the average flow rate for using an appliance is larger than the total registered flow rate, it is determined that the registered flow rates are small and registered in the larger order by the increase flow rate registering unit 14a of the flow rate registering unit 14. Further, when the flow rate difference is negative, that is, when the used flow rate is smaller than the total registered flow rate, it is determined that the monitored flow rate is large and downward correction is performed to the closest registered flow rate on the basis of the flow rate as much as the flow rate difference. If the downward correction is not completed, the downward correction is performed to the second closest registered flow rate. As a result, the correction is performed until the flow rate difference is removed. Accordingly, correction is performed such that the difference between the actual flow rate and the total flow rate of the flow rate registering unit is removed.

With the water heater 4 used and the gas table 8 or the gas fan heater 9 used for heating a floor, when the load at the earlier operation is large and the load in the stable state is small or when temperature is stabilized from when the difference between earlier water temperature and the set temperature is large due to shower, the combustion amount is largely changed. In this case, the increase flow rate of the gas table 8 or the gas fan heater 9 is registered by the increase flow rate registering unit 14a of the flow rate registering unit 14 and the flow rate of the water heater 4 is also registered. The used flow rate of the water heater 4 when there is a flow rate change at the earlier operation of the water heater 4, that is, the average flow rate at that time point is registered as a registered flow rate in the flow rate registering unit 14. Further, when the operation continues and the room temperature is stabilized, the combustion amount, that is, the gas flow rate is controlled to be decreased by proportional control, but it may be slowly changed, such that a fine change from which the flow rate change determining unit 13 cannot determine that there is a change is kept for a long time. In this case, since there is not flow rate change, the registered value of the flow rate registering unit 14 does not change. Further, when the water heater 4 is stopped, it is determined that the flow rate is decreased by the flow rate change determining unit 13 and the registered flow rate corresponding to the flow rate decreased by the decrease flow rate registering unit 14b is removed. In this case, the sum of the registered flow rates are calculated at each determination timing of flow rate change or every time the average flow rate is obtained, a flow rate change due to change of the appliance is obtained such that the newly obtained average flow rate and the sum of the registered flow rates are the same, and when there is a flow rate difference and the registered flow rate is small, it is registered as a new flow rate, on the contrary, when the registered flow rate is large, downward correction is performed as much as the flow rate difference to the smallest registered flow rate of the registered flow rates and it is re-registered. That is, although the flow rate of the gas table 8 or the gas fan heater 9 is actually used, as a result of a decrease in the flow rate where the flow rate of the water heater 4 does not change, it is prevented from monitoring the flow rate, with the total flow rate of the registered flow rates being the same as the detected average flow rate (that is, the total flow rate value of the actual flow rate). When the amount of flow rate difference is negative, that is, the registered total flow rate is larger than the flow rate that is actually used, correction is performed from the flow rate registered value closest to the flow rate difference and it does not interfering with section of used time monitoring of the maximum registered flow rate value. On the contrary, when the flow rate difference is positive, that is, the registered total flow rate is smaller than the flow rate that is actually used, it is unclear that the flow rate corresponding to the difference is the amount of flow rate change from which flow rate value, such that the flow rate is registered as it is. The section of used time monitoring becomes one large section by being added to the maximum registered flow rate value, the time limit that can be used by an appliance is reduced, such that usability is prevented from decreasing.

Further, the abnormality determining unit 17 monitors the used appliance with reference to the time limit in use time at the reset registered flow rate in the monitoring value storing unit 18. When the monitoring time passes and abnormality is generated, gas supply is stopped by operating the shutoff unit 19, such that safety is ensured.

Further, the numerical limit used in the embodiment is an example and the type of use is also not limited to the embodiment.

As described above, when a flow rate change equal to or more than a predetermined value is not detected by the flow rate change determining unit 13 and a large flow rate change due to stopping of the used appliance is detected, and when a flow rate difference is generated between the total flow rate value of a plurality of appliances and the actually used flow rate, the obtained flow rate difference is re-registered, such that the abnormality determining unit 17 can monitor the flow rate of the appliance that is actually used and it is possible to ensure an appropriate use limit function for the used appliance, and when the appliance of which the flow rate is slightly changed stops being used or the flow rate decreases, it can be prevented that the flow rate value with a fine flow rate change is re-registered with the appliance by error and erroneous shutoff according to monitoring of the use time at the flow rate. Further, it is possible to shut off early or late when the appliance is abnormally used, such that safety and reliability are considerably increased and it is possible to prevent the gas provider from going out due to early shutoff, thereby increasing usability.

### (Second Embodiment)

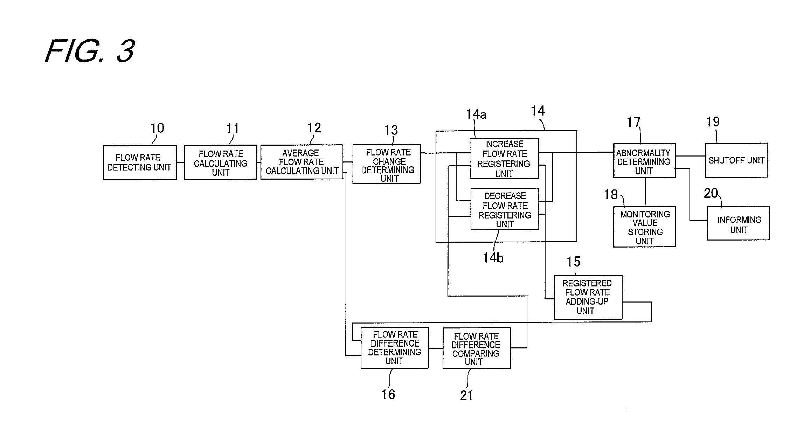

Fig. 3 is a control block diagram of a gas shutoff device according to a second embodiment of the present invention. The components having the same functions as those of Fig. 2 are given the same reference numerals.

In Fig. 3, "21" indicates a flow rate comparing unit, which obtains a flow rate difference from the output of the registered flow rate adding-up unit 15 and the average flow rate calculating unit 12 in the flow rate difference determining unit 16, and outputs a request for correcting flow rate registration, but outputs the flow rate difference and a registration correction signal to the flow rate registering unit 14 when the flow rate difference is equal to or more than a predetermined flow rate value corresponding to the flow rate of an appliance.

Next, the operation of the gas shutoff device 2 having the configuration described above is described. When a gas appliance, for example, the water heater 4 or a gas fan heater 9 of a customer is used, the flow rate is detected by the flow rate detecting unit 10. For example, when an ultrasonic sensor is used, the propagation time of an ultrasonic wave is measured as a detection value and the signal is transmitted to the flow rate calculating unit 11 and converted into an instantaneous flow rate value, and then calculated as an average flow rate for each predetermined number by the average flow rate calculating unit 12. The flow rate change determining unit 13 periodically determines presence of an appliance flow rate change in the obtained average flow rate. After the flow rate change determining unit 13 determines a flow rate change, a plurality of average flow rates is stored in time-series. Whether there is a flow rate change, for example when there is a predetermined flow rate change ratio or more of the previous value, or whether there is a predetermined flow rate difference is obtained from the existing flow rate (for example, the previous stored flow rate value, the flow rate value at the time before the last or the time before N-th time) stored in the flow rate change determining unit 13 and the present average flow rate. That is, whether the appliance is used or stopped is determined from the change state by using the average flow rate value output at predetermined intervals while the amount of flow rate change for the change is newly registered in the flow rate registering unit 14 as the registered flow rate of the used appliance and, for a decreased change, the registered flow rate that has been registered is downwardly corrected or removes, thereby accurately setting the registered flow rate corresponding to the used appliance at the time of change. When the flow rate is changed by various control or stop of the appliance at the time of decrease change, the amount of flow rate change and the registered flow rate may not be the same, such that when it is within a predetermined flow rate range or a predetermined ratio, the flow rate registering unit 14 determines that it is the corresponding appliance and performs decrease correction. When it is within the predetermined range, the difference between the registered flow rate and the decreased flow rate is the difference between the actual flow rate and the registered flow rate.

For example, when the water heater 4 is used, for example, the existing flow rate is 0, the flow rate is changed to 1500L/h, but whether there is a change is obtained by comparing the change with the present average flow rate and the existing average flow rate. When the change ratio or the amount of change is equal to or more than a predetermined value, it is determined that there is a change and an appliance is used, and it is registered in the flow rate registering unit 14. Alternatively, when the water heater 4 is used while the gas table 8 is used, the flow rate of the gas table 8 is stored to the existing flow rate of the flow rate change determining unit 13, the flow rate change determining unit 13 obtains the changed flow rate from the present average flow rate and the stored existing flow rate value, and similarly, when the change ratio from the present flow rate or the changed flow rate is equal to or more than a predetermined value, it is determined there is a change and the changed flow rate is registered in the flow rate registering unit 14. In the flow rate registering unit 14, the average flow rate obtained when there is a flow rate change is input to the increase flow rate registering unit 14a and the decrease flow rate registering unit 14b. When the flow rate increase and the determined signal are input to the flow rate change determining unit 13, the flow rate increasing from the previous average flow rate is registered. Further, when any appliance stops being used or the flow rate changes while a plurality of appliances is used, the flow rate change determining unit 13 determines presence of a decrease change from the stored existing flow rate value and average flow rate, outputs the decrease change flow rate and the flow rate registering unit 14 removes or reduces the flow rate registered value that is the closest to the decrease change flow rate in the registered flow rates. When the amount of the flow rate change is not the same as the registered flow rate value, the registered value having the smallest difference from the amount of the flow rate change, or a change ratio between the registered flow rate and the difference of the registered flow rates and the amount of the flow rate change is obtained, the smallest flow rate value is downwardly corrected to the flow rate change value and determined as the flow rate change of the closest appliance, and the registered values are changed in ascending order.

Further, all of the registered flow rate values are added up in the registering flow rate adding-up unit 15, such that the total flow rate is obtained. A flow rate difference is obtained from the obtained average flow rate and the total registered flow rate by the flow rate difference determining unit 16. When the flow rate difference is not 0, it is determined that the flow rate is not registered in the flow rate registering unit 14 that monitors the used appliance and whether a flow rate as much as the amount of the flow rate difference is re-registered is determined by the flow difference comparing unit 21. When the flow rate difference between the actual flow rate and the registered flow rate corresponding to the flow rate of the appliance (21 L/h or more for LP gas and for example, 51.82 L/h or more for city gas), re-registration is performed by the flow rate difference comparing unit 21. That is, when the flow rate difference is positive, equal to or more than a predetermined value, that is, the average flow rate for using an appliance is larger by a predetermined value than the total registered flow rate, it is determined that the registered flow rates are small and the flow rate difference flow rate is registered in the larger order by the increase flow rate registering unit 14a of the flow rate registering unit 14. Further, when the flow rate difference is equal to or more than a predetermined negative value, that is, when the used flow rate is smaller by a predetermined flow rate or more, than the total registered flow rate, it is determined that correction of the registered monitored flow rate is considerably insufficient. In this case, downward correction is performed from the closest registered flow rate on the basis of the flow rate as much as the flow rate difference. If it is reduced from the next close flow rate registered value when it is not decreased. As a result, the correction is performed until the flow rate difference is removed. Accordingly, correction is performed such that the difference between the actual flow rate and the total flow rate of the flow rate registering unit is removed.

With the water heater 4 used and the gas table 8 or the gas fan heater 9 used for heating a floor, when the load at the earlier operation is large and the load in the stable state is small or when temperature is stabilized from when the difference between earlier water temperature and the set temperature is large due to shower, the combustion amount is largely changed. In this case, the increase flow rate of the gas table 8 or the gas fan heater 9 is registered by the increase flow rate registering unit 14a of the flow rate registering unit 14 and the flow rate of the water heater 4 is also registered. The used flow rate of the water heater 4 when there is a flow rate change at the earlier operation of the water heater 4, that is, the average flow rate at that time point is registered as a registered flow rate in the flow rate registering unit 14. Further, when the operation continues and the room temperature is stabilized, the combustion amount, that is, the gas flow rate is controlled to be decreased by proportional control, but it may be slowly changed, such that a fine change from which the flow rate change determining unit 13 cannot determine that there is a change is kept for a long time. In this case, since there is not flow rate change, the registered value of the flow rate registering unit 14 does not change. Further, when the water heater 4 is stopped, it is determined that the flow rate is decreased by the flow rate change determining unit 13 and the registered flow rate corresponding to the flow rate decreased by the decrease flow rate registering unit 14b is removed. In this case, the sum of the registered flow rates are calculated at each determination timing of flow rate change or every time the average flow rate is obtained, a flow rate change due to change of the appliance is obtained such that the newly obtained average flow rate and the sum of the registered flow rates are the same, and when there is a flow rate difference and the registered flow rate is small, it is registered as a new flow rate, on the contrary, when the registered flow rate is large, downward correction is performed as much as the flow rate difference to the smallest registered flow rate of the registered flow rates and it is re-registered. That is, although the flow rate of the gas table 8 or the gas fan heater 9 is actually used, as a result of decrease of flow rate where the flow rate of the water heater 4 does not change, it is prevented from monitoring the flow rate, with the total flow rate of the registered flow rates being the same as the detected average flow rate (that is, the total flow rate value of the actual flow rate). When the amount of flow rate difference is equal to or more than a predetermined negative value, that is, the registered total flow rate is larger than the flow rate that is actually used, correction is performed from the flow rate registered value closest to the flow rate difference, such that it does not interfering with section of used time monitoring of the maximum registered flow rate value. On the contrary, when the flow rate difference is equal to or more than a predetermined positive value, that is, the registered total flow rate is smaller than the flow rate that is actually used, it is unclear that the flow rate corresponding to the difference is the amount of flow rate change from which flow rate value, such that the flow rate is registered as it is. The section of used time monitoring becomes one large section by being added to the maximum registered flow rate value, the time limit that can be used by an appliance is reduced, such that usability is prevented from decreasing.

Further, the abnormality determining unit 17 for monitoring the used appliance with reference to the time limit in use time at the reset registered flow rate in the monitoring value storing unit 18. When the monitoring time passes and abnormality is generated, gas supply is stopped by operating the shutoff unit 19, such that safety is ensured.

Further, the numerical limit used in the embodiment is an example and the type of use is also not limited to the embodiment.

As described above, when a flow rate change equal to or more than a predetermined value is not detected by the flow rate change determining unit 13 and a large flow rate change due to stopping of the used appliance is detected, and when a flow rate difference is generated between the total flow rate value of a plurality of appliances and the actually used flow rate, the obtained flow rate difference is re-registered, such that the abnormality determining unit 17 can monitor the flow rate of the appliance that is actually used and it is possible to ensure an appropriate use limit function for the used appliance, and when the appliance of which the flow rate is slightly changed stops being used or the flow rate decreases, it can be prevented that the flow rate value with a fine flow rate change is re-registered with the appliance by error and erroneous shutoff according to monitoring of the use time at the flow rate. Further, it is possible to shut off early or late when the appliance is abnormally used, such that safety and reliability are considerably increased and it is possible to prevent the gas provider from going out due to early shutoff, thereby increase usability.

### (Third Embodiment)

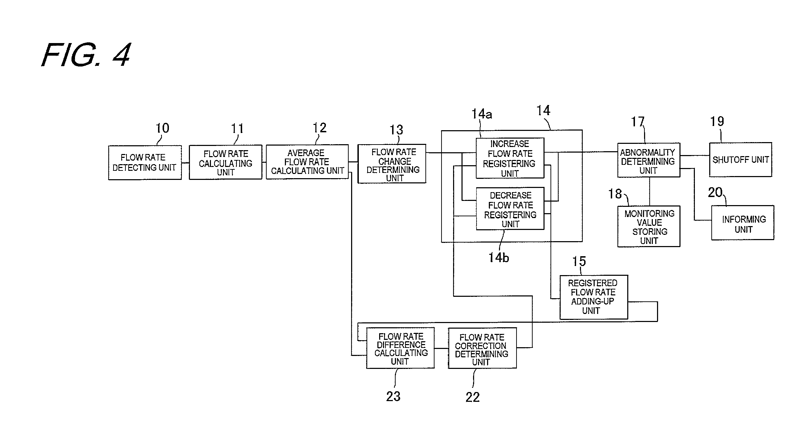

Next, a third embodiment of the present invention is described with reference to Fig. 1 and Fig. 4.

Fig. 4 is s control block diagram of a gas shutoff device according to the third embodiment of the present invention. The components having the same functions as those of Fig. 2 and Fig. 3 are given the same reference numerals.

A gas shutoff device 2 is disposed at the inlet portion of a gas supply pipe 1 in each home, a pipe diverging from a gas pipe 3 through the gas shutoff device 2 extends to the place where various gas appliances are disposed, such that gas is supplied. For example, a water heater 4 is disposed outside a house and hot water generated by the water heater 4 is supplied to a hot-water tap 5 at the kitchen, a bath 6 with a shower device or a bathtub, or a floor heating device 7 disposed in the living room through a water pipe, such that various use types are implemented.

Further, in the house, gas is supplied to a gas table 8 disposed in the kitchen or a gas fan heater 9 disposed in the living room or a bedroom and appropriately used in accordance with demand.

Further, when the disposed gas appliance is used and the gas is consumed, the amount of use is measured at the gas shutoff device 2 and the amount of use is accumulated and stored as a measured value. Information process is performed on the data stored in the gas shutoff device 2 on the basis of periodic data request instruction from the gas provided and then is used as information on the gas fee or the amount of use of gas or a discount service provided by the gas provider, for the consumer or the gas provider.

Further, a gas channel with a gas inlet and a gas outlet is formed and a flow rated detecting unit 10 that measures the gas flow rate is disposed at the gas shutoff device 2. Further, there are various types for the flow rate detecting unit 10, that is, transmitting an ultrasonic signal from one side to the other side from a pair of ultrasonic sensor disposed in a channel and detecting gas flow rate from the propagation time, which is described in the embodiment, or disposing a heat-wire sensor in the channel and obtaining a flow rate from an impedance that is changed by flow, or detecting a flow rate as an electric pulse signal representing a mechanical operation of a measuring layer, which detects a gas amount by a measuring layer, by magnet and a read switch or magnetic resistor.

The flow rate detecting unit 10 using an ultrasonic sensor is briefly described. A first transceiver that transmits or receives an ultrasonic wave and a second transceiver that receives or transmits an ultrasonic wave are disposed against the flow direction and can be switched to transmit and receive by a control circuit. An ultrasonic wave is transmitted from the upper stream to the lower stream by processing signals of the first transceiver and the second transceiver and measuring a flow rate. The second transceiver receives the signal and measuring unit measures the propagation time.

Next, a switching unit transmits an ultrasonic signal from the lower stream to the upper stream and measures the propagation time. Further, a flow rate value is obtained by the flow rate calculating unit 11, using a flow rate coefficient corresponding to the size of the channel and the flow state of the fluid, from a propagation time difference of the ultrasonic waves of the first transceiver and the second transceiver. The flow rate is obtained for every period that is predetermined as an instantaneous flow rate value.

Further, the instantaneous flow rate values obtained for every predetermined period is input to the average flow rate calculating unit 12 and a predetermined number of instantaneous times are collected and output as an average flow rate. The flow rate change determining unit 13 determines presence of a flow rate change of the appliance from the average flow rate. A change between the average flow rate obtained at this time and the previous average flow rate is determined. Thereafter, the average flow rate of this time is stored in time-series in the flow rate change determining unit 13. That is, the flow rate change determining unit 13 determines presence of a change equal to or more than a predetermined changed flow rate or flow rate change ratio by comparing the average flow rate calculated at this time by the average flow rate calculating unit 12 with the previous average flow rate, and determines whether the appliance starts to be used or whether there is a flow rate change. For example, when a consumer uses a water heater 4, the flow rate value changes from 0 to a predetermined flow rate, or whether to use/stop the appliance or whether there is a flow rate change is determined from whether a flow rate change ratio or the amount of flow rate change is equal to or more than a predetermined value, from the average flow rate when the water heater 4 is used while another appliance is used and the previous flow rate.

Further, when the flow rate change determining unit 13 determines a flow rate change, it is determined whether the appliance starts to be used or an appliance stops being used, in detail, when the appliance is used, the amount of a flow rate change is set as a registered flow rate value in the flow rate registering unit 14. The flow rate registering unit 14 is composed of an increase flow rate registering unit 14a and a decrease flow rate registering unit 14b. It is determined that the appliance is additionally used every time a change is detected ad the flow rate increase side and the amount of each flow rate change is set as a new flow rate registered value. On the contrary, when the appliance stops being used, the registered flow rate value close to the amount of flow rate change in the registered flow rate values registered in the flow rate registering unit 14 is removed from the flow rate registering value by determining that the appliance is stopped. Similar to the removing, it is determined that the appliance stops being used every time a change is detected at the flow rate decrease side and removing of a registered flow rate is performed. When the flow rate change is the same as the registered flow rate value, a registered flow rate having the smallest difference from the amount of flow rate change, or a change ratio is obtained from a ratio between the registered flow rate and the difference between the registered flow rates and the amount of flow rate change is obtained, the flow rate value of the smallest change ratio is downwardly corrected to the flow rate change value and determined as the flow rate change of the closest appliance, and the registered values are changed in ascending order.

Next, a registered flow rate adding-up unit 15 obtains the total flow rate of the flow rate values registered in the flow rate registering unit 14. The flow rate difference calculating unit 23 obtains whether there is a flow rate difference from the sum of registered flow rates in the registered flow rate adding-up unit 15 and the average flow rate of all of the used appliance, which is obtained by the average flow rate calculating unit 12, and obtains the flow rate difference. "22" is a flow rate correction determining unit, which outputs a request for the next flow rate registration correction, when a flow rate change detection signal of the decrease side is input by the flow rate change determining unit 13 while a positive flow rate difference detected by the flow rate difference calculating unit 23 is input, other than output of the registered flow rate adding-up unit 15 and the average flow rate calculating unit 12. First, in this case, the flow rate difference is generated before the flow rate change value, such that it is determined that a fine change that is not detected by the flow rate change determining unit 13 keeps generated, and the amount of the flow rate difference is addition-corrected first to the largest flow rate value of the registered flow rates that are registered in advance. Second, for a new registered flow rate value in which a flow rate difference from the actual flow rate is corrected, the appliance corresponding to the decreased flow rate detected by the flow rate change determining unit 13 is found by the decrease flow rate registering unit 14b and downward correction is performed by the flow rate registering unit 14. This is performed until the flow rate difference is removed.

Further, an abnormality determining unit 17 monitors an appliance that is used at a set registered flow rate. A monitored value storing unit 18 stores a time limit of a use time corresponding to each flow rate section or a monitoring-determining value of the maximum used flow rate. For example, when a hose for supplying gas to a stove is deviated due to a certain reason, abnormal mis-flow rate is generated, but the monitored value storing unit 18 stores a total flow rate shutoff value for monitoring this state or a time limit of a use time regulating the limit in use time, corresponding to when an appliance is used longer than the maximum use time that is the common use time. The abnormality determining unit 17 compares and determines the set value with the registered flow rate value of the flow rate registering unit 14, such that it is monitored whether the registered flow rate value exceeds the maximum use flow rate value or whether the use time of the appliance exceeds the time limit of continuous use corresponding to the registered flow rate. When the abnormality determining unit 17 determines that there is abnormality, a shutoff signal is transmitted to a shutoff unit 19 and the gas supply is stopped. Further, an informing communicating unit 20 displays the shutoff state or the shutoff fact on a liquid crystal display device and notifies the gas provider who monitors safety of the gas by communication through a telephone line.

Next, the operation of the gas shutoff device 2 having the configuration described above is described. When a gas appliance, for example, the water heater 4 or a gas fan heater 9 of a customer is used, the flow rate is detected by the flow rate detecting unit 10. For example, when an ultrasonic sensor is used, the propagation time of an ultrasonic wave is measured as a detection value and the signal is transmitted to the flow rate calculating unit 11 and converted into an instantaneous flow rate value, and then calculated as an average flow rate for each predetermined number by the average flow rate calculating unit 12. The flow rate change determining unit 13 periodically determines presence of an appliance flow rate change in the obtained average flow rate. After the flow rate change determining unit 13 determines a flow rate change, a plurality of average flow rates is stored in time-series. Whether there is a flow rate change is obtained from the existing flow rate (for example, the previous stored flow rate value, the flow rate value at the time before the last or the time before N-th time) stored in the flow rate change determining unit 13 and the present average flow rate. That is, whether the appliance is used or stopped is determined from the change state by using the average flow rate value output at predetermined intervals while the amount of flow rate change for the change is newly registered in the flow rate registering unit 14 as the registered flow rate of the used appliance and the registered flow rate that has been registered is downwardly corrected or removes, thereby accurately setting the registered flow rate corresponding to the used appliance at the time of change. When the flow rate is changed by various control or stop of the appliance at the time of decrease change, the amount of flow rate change and the registered flow rate may not be the same, such that when it is within a predetermined flow rate range or a predetermined ratio, the flow rate registering unit 14 determines that it is the corresponding appliance and performs decrease correction. When it is within the predetermined range, the difference between the registered flow rate and the decreased flow rate is the difference between the actual flow rate and the registered flow rate.

For example, when the water heater 4 is used, for example, the existing flow rate is 0, the flow rate is changed to 1500L/h, but whether there is a change is obtained by comparing the change with the present average flow rate and the existing average flow rate. When the change ratio or the amount of change is equal to or more than a predetermined value, it is determined that there is a change and an appliance is used, and it is registered in the flow rate registering unit 14. Alternatively, when the water heater 4 is used while the gas table 8 is used, the flow rate of the gas table 8 is stored to the existing flow rate of the flow rate change determining unit 13, the flow rate change determining unit 13 obtains the changed flow rate from the present average flow rate and the stored existing flow rate value, and similarly, when the change ratio from the present flow rate or the changed flow rate is equal to or more than a predetermined value, it is determined there is a change and the changed flow rate is registered in the flow rate registering unit 14. In the flow rate registering unit 14, the average flow rate obtained when there is a flow rate change is input to the increase flow rate registering unit 14a and the decrease flow rate registering unit 14b. When the flow rate increase and the determined signal are input to the flow rate change determining unit 13, the flow rate increasing from the previous average flow rate is registered. Further, when any appliance stops being used or the flow rate changes while a plurality of appliances is used, the flow rate change determining unit 13 determines presence of a decrease change from the stored existing flow rate value and average flow rate, outputs the decrease change flow rate and the flow rate registering unit 14 removes or reduces the flow rate registered value that is the closest to the decrease change flow rate in the registered flow rates. When the amount of the flow rate change is not the same as the registered flow rate value, the registered value having the smallest difference from the amount of the flow rate change, or a change ratio between the registered flow rate and the difference of the registered flow rates and the amount of the flow rate change is obtained, the smallest flow rate value is downwardly corrected to the flow rate change value and determined as the flow rate change of the closest appliance, and the registered values are changed in ascending order.

Further, all of the registered flow rate values are added up in the registering flow rate adding-up unit 15, such that the total flow rate is obtained. A flow rate difference is obtained from the obtained average flow rate and the total registered flow rate by the flow rate difference calculation unit 23. When the flow rate difference is not 0, it is determined that the flow rate is not registered in the flow rate registering unit 14 that monitors the used appliance and a flow rate difference signal is output to the flow rate correction determining unit 22. When flow rates used by a plurality of appliances are registered in the flow rate registering unit 14 and the registered flow rates of the appliances make fine increase in flow rate, if any appliance that is in use stops or changes the flow rate, the behavior of the decrease change is detected by the flow rate change determining unit 13 and output to the flow rate registering unit 14 and the flow rate correction determining unit 22.

When the flow rate difference signal and the flow rate change detection signal are input, the flow rate correction determining unit 22 gives a control instruction of flow rate registration at the next time. When there is a positive flow rate difference, that is, the flow rate changes to be decreased, the flow rate of the appliance that has been used before the decrease change is generated, and when fine flow rate increase change that is not detected by the flow rate change determining unit 13 continues for a long time, at the point of time when the decrease change is detected, the registered total flow rate and the average flow rate become difference. That is, when the flow rate difference obtained by subtracting the average flow rate used by the appliances from the registered total flow rate is positive, it is determined that any one of the registered flow rates of the appliances changes and decreases. The amount of the flow rate difference at the flow rate difference obtained first is addition-corrected to the registered maximum flow rate value by the increase flow rate registering unit 14a of the flow rate registering unit 14. This is because a relatively large number of appliances are provided with a flow rate control function. The total registered flow rates and the average flow rate before the decrease change detection value become the same by this process. Next, downward correction is performed on the flow rate of the appliance which corresponds to the decreased amount of flow rate detected by the flow rate change determining unit 13. The sum of monitored flow rates of the appliances and the total registered flow rate become the same, such that the registered flow rate that is the closest to the flow rate of the appliance which corresponds to the decreased amount of flow rate is searched by the decrease flow rate registering unit 14b, and removed or downwardly corrected. For example, a ratio between the registered flow rate and the difference between the registered flow rate and the decreased flow rate is obtained and the degree of change from the registered flow rate is obtained, such that it is determined that the appliance of which the flow rate is the smallest changes in flow rate. The detected decreased flow rate is downwardly corrected from the registered flow rate that is determined as changing in flow rate. If the downward correction is performed and the flow rate difference remains, downward correction is performed from the next close registered flow rate value. As a result, the correction is performed until the flow rate difference is removed.

With the water heater 4 used and the gas table 8 or the gas fan heater 9 used for heating a floor, when the load at the earlier operation is large and the load in the stable state is small or when temperature is stabilized from when the difference between earlier water temperature and the set temperature is large due to shower, the combustion amount is largely changed. In this case, the increase flow rate of the gas table 8 or the gas fan heater 9 is registered by the increase flow rate registering unit 14a of the flow rate registering unit 14 and the flow rate of the water heater 4 is also registered. The used flow rate of the water heater 4 when there is a flow rate change at the earlier operation of the water heater 4, that is, the average flow rate at that time point is registered as a registered flow rate in the flow rate registering unit 14. Further, when the operation continues and the room temperature is stabilized, the combustion amount, that is, the gas flow rate is controlled to be decreased by proportional control. Thereafter, when the door or the window of a room is opened, the room temperature slowly decreases and the gas flow rate is controlled to be increased by proportional control. In this case, the flow rate may increase such that it is not detected by the flow rate change determining unit 13. When a fine change from which the flow rate change determining unit 13 cannot determine that there is a change continues for a long time, the flow rate registered in the flow rate registering unit 14 and the average flow rate regularly obtained are not the same. In this case, when another appliance is used, first, the flow rate changed by the flow rate change is registered first as the flow rate of the appliance in the flow rate registering unit 14, and the amount of flow rate that slowly increases is obtained by the flow rate difference calculating unit 23, as the amount of flow rate difference between the sum of registered flow rates and the average flow rate. The amount of flow rate difference is output as the changed flow rate of the flow rate of the appliance which is registered in advance before it is newly registered, in order to add first the amount of flow rate by the flow rate correction determining unit 22. It is not newly registered in the increase flow rate registering unit 14a of the flow rate registering unit 14, but added to the existing registered flow rate described above. As a result, the average flow rate and the total registered flow rate become the same. Further, when a plurality of registered flow rates before being newly registered exist, the amount of flow rate difference that slowly increases is added to the large one of the registered flow rates. That is, this is because most appliances of which the flow rate is large is provided with electronic control, such as proportional control.

Further, the abnormality determining unit 17 monitors the used appliance with reference to the time limit in use time at the reset registered flow rate in the monitoring value storing unit 18. when the monitoring time passes and abnormality is generated, gas supply is stopped by operating the shutoff unit 19, such that safety is ensured.

Further, the numerical limit used in the embodiment is an example and the type of use is also not limited to the embodiment.

As described above, when a flow rate change equal to or more than a predetermined value is not detected by the flow rate change determining unit 13 and the flow rate slowly increases, it is determined that the flow rate change is a changed flow rate by control of an appliance that is registered in advance, by a timing of the use of any appliance, such that the amount of flow rate is first addition-corrected to the registered flow rate of the appliance and a flow rate registration process according to the flow rate change is performed, with the sum in the flow rate registering unit 14 being the same as the flow rate of the appliance that is actually used before the change is detected. Accordingly, the abnormality determining unit 18 can monitor the flow rate of the appliance that is actually used and it is possible to ensure an appropriate use limit function for the used appliance, and when the appliance of which the flow rate is slightly changed stops being used or the flow rate decreases, it can be prevented that the flow rate value with a fine flow rate change is re-registered with the appliance by error and erroneous shutoff according to monitoring of the use time at the flow rate. Further, it is possible to shut off early or late when the appliance is abnormally used, such that safety and reliability are considerably increased and it is possible to prevent the gas provider from going out due to early shutoff, thereby increase usability.

Although the present invention was described in detail with reference to specific embodiments, it is apparent to those skilled in the art that the present invention may be changed and modified without departing from the spirit of the present invention.

The present invention is based on Japanese Patent Application (2009-017560 and 2009-017561), filed on January 29, 2009, and uses the contents as reference.

### Industrial Applicability

As described above, the gas shutoff device according to the present invention can make the function of limiting the use time of an appliance, of which the used amount is changed small, appropriate, and can be applied to all of the appliance monitoring appliances that monitor the amount of water in a water meter or monitor the amount of electricity of a digital electric meter.

### Reference Signs List

- 10:: flow rate detecting unit
- 11:: flow rate calculating unit
- 12:: average flow rate calculating unit
- 13:: flow rate change determining unit
- 14:: flow rate registering unit
- 14a:: increase flow rate registering unit
- 14b:: decrease flow rate registering unit
- 15:: registered flow rate adding-up unit
- 16:: flow rate difference determining unit
- 17:: abnormality determining unit
- 18:: monitoring value storing unit
- 19:: shutoff unit
- 20:: informing unit
- 21:: flow rate difference comparing unit
- 22:: flow rate correction determining unit
- 23:: flow rate difference calculating unit

## Claims

1. A gas shutoff device that monitors a use state of a plurality of gas appliances and stops supply of gas when abnormality is generated, the gas shutoff device comprising:
a flow rate detecting unit for measuring a flow rate;
a flow rate calculating unit for calculating an instantaneous flow rate value from a detected value of the flow rate detecting unit;
an average flow rate calculating unit for obtaining an average flow rate from the instantaneous flow rate obtained by the flow rate calculating unit;
a flow rate change determining unit for determining presence of an appliance change flow rate from the obtained average flow rate;
a flow rate registering unit for registering a flow rate change when an increased change is determined by the flow rate change determining unit and downwardly correcting a registered flow rate that is close to the flow rate change when a decreased change is determined;
a flow rate difference determining unit for registering a flow rate difference by an increase flow rate registering unit when the difference is positive by calculating the flow rate difference from a sum of the registered flow rates and the average flow rate and downwardly correcting the registered flow rate by a decrease flow rate registering unit when the difference is negative;
a monitoring value storing unit for storing a determined value for monitoring the use state of the appliance;
an abnormality determining unit for determining presence of abnormality from the registered flow rates of the flow rate registering unit and the determined value of the monitoring value storing unit; and
a shutoff unit for stopping supply of gas when the abnormality is determined by the abnormality determining unit.

2. A gas shutoff device that monitors a use state of a plurality of gas appliances and stops supply of gas when abnormality is generated, the gas shutoff device comprising:
a flow rate detecting unit for measuring a flow rate;
a flow rate calculating unit for calculating an instantaneous flow rate value from a detected value of the flow rate detecting unit;
an average flow rate calculating unit for obtaining an average flow rate from the instantaneous flow rate obtained by the flow rate calculating unit;
a flow rate change determining unit for determining presence of an appliance change flow rate from the obtained average flow rate;
a flow rate registering unit for registering a flow rate change when an increased change is determined by the flow rate change determining unit and downwardly correcting a registered flow rate that is close to the flow rate change when a decreased change is determined;
a flow rate difference determining unit for registering a flow rate difference by an increase flow rate registering unit when the difference is positive by calculating the flow rate difference from a sum of the registered flow rates and the average flow rate and downwardly correcting a registered flow rate by a decrease flow rate registering unit when the difference is negative;
a flow rate difference comparing unit for outputting a flow rate for correction when the flow rate difference is equal to or more than a predetermined value;
a monitoring value storing unit for storing a determined value for monitoring the use state of the appliance;
an abnormality determining unit for determining presence of abnormality from the registered flow rates of the flow rate registering unit and the determined value of the monitoring value storing unit, and
a shutoff unit for stopping supply of gas when the abnormality is determined by the abnormality determining unit.

3. A gas shutoff device that monitors a use state of a plurality of gas appliances and stops supply of gas when abnormality is generated, the gas shutoff device comprising:
a flow rate detecting unit for measuring a flow rate;
a flow rate calculating unit for calculating an instantaneous flow rate value from a detected value of the flow rate detecting unit;
an average flow rate calculating unit for obtaining an average flow rate from the instantaneous flow rate obtained by the flow rate calculating unit;
a flow rate change determining unit for determining presence of an appliance change flow rate from the obtained average flow rate;
a flow rate registering unit for registering a flow rate change when an increased change is determined by the flow rate change determining unit and downwardly correcting a registered flow rate that is close to the flow rate change when a decreased change is determined;
a flow rate difference calculating unit for obtaining a flow rate difference from a sum of the registered flow rates and the average flow rate;
a flow rate correction determining unit for adding the flow rate difference first to the flow rate registration value when a decreased change is detected by the flow rate change determining unit and the flow rate difference obtained from the sum of the registered flow rates and the average flow rate is positive, and then correcting the registered flow rate with the decreased flow rate;
a monitoring value storing unit for storing a determined value for monitoring the use state of the appliance;
an abnormality determining unit for determining presence of abnormality from the registered flow rates of the flow rate registering unit and the determined value of the monitoring value storing unit; and
a shutoff unit for stopping supply of gas when the abnormality is determined by the abnormality determining unit.
